# EUROPEAN PATENT APPLICATION

(11) **EP 4 074 991 A1**
(43) Date of publication of application: **19.10.2022**
(21) Application number: 21168041.8
(22) Date of filing: 13.04.2021
(51) Int. Cl.: F16B 13/06

(54) **EXPANSION ANCHOR**

(71) Applicant: Hilti Aktiengesellschaft, 9494 Schaan (LI)
(72) Inventor: Shimahara, Hideki, 9472 Grabs (CH)
(74) Representative: Hilti Aktiengesellschaft Corporate Intellectual Property

(57) **Abstract**

Expansion anchor having an anchor bolt, an expansion sleeve, and a wedge body located in a front region of the anchor bolt for wedging the expansion sleeve, wherein the expansion sleeve has a front face facing the wedge body, wherein at least one expansion slit is provided within the expansion sleeve, wherein the expansion slit has a mouth that is located adjacent to the front face, a stem that adjoins the mouth and a head that adjoins the stem, wherein the head is wider than the stem, and wherein the stem is located between the head and the mouth, wherein the stem is delimited by a first flank and by a second flank, characterized in that the first flank and the second flank are both non-planar throughout, so as to form at least one widening and at least one narrowing along the stem.

## Description

The invention relates to an expansion anchor according to the preamble of claim 1. Such an expansion anchor is provided with
- an anchor bolt,
- an expansion sleeve that surrounds the anchor bolt, and
- a wedge body located in a front region of the anchor bolt for wedging the expansion sleeve, wherein the expansion sleeve has a front face facing the wedge body,
- wherein at least one expansion slit is provided within the expansion sleeve, wherein the expansion slit originates at the front face of the expansion sleeve, wherein the expansion slit has a mouth that is located adjacent to the front face, a stem that adjoins the mouth and a head that adjoins the stem, wherein the head is wider than the stem, and wherein the stem is located between the head and the mouth,
- wherein the stem of the expansion slit is delimited by a first flank of the expansion sleeve and by a second flank of the expansion sleeve.

WO19081300 A1 describes an expansion anchor with expansion sleeve abutment walls provided on the expansion body. The expansion sleeve abutment walls can engage with the expansion sleeve to provide an interlock when the anchoring process has reached an advanced state. The expansion sleeve abutment walls can be provided at the ends of recesses provided in the expansion body. On this basis, WO19243084 A1 further teaches to provide said recesses with nonaxisymmetric cross-section. According to WO19243084 A1, the expansion sleeve has non-uniform wall thickness. Both the expansions sleeves of WO19081300 A1 and of WO19243084 A1 are provided with expansion slits that define forwardly facing expansion fingers.

Expansion slits in an expansion sleeve can for example be formed by shape cutting. Alternatively (or additionally), the slits can be formed in a blanking process in which an essentially flat sleeve blank is locally ruptured by shearing in order to form the slits, before the blank is bent around the anchor bolt to give the expansion sleeve. This allows to obtain particularly narrow expansion slits, which can in term provide a particularly large remaining surface area of the expansion sleeve, which can in term be advantageous in view of anchor performance.

An inventive anchor is characterized in that the first flank and the second flank are both non-planar throughout, so as to form at least one widening and at least one narrowing along the stem.

Accordingly, the flanks of the expansion slit are not straight, and preferably not plan parallel. In particular, the flanks can form a free form surface. This can improve versatility and performance. In addition, it may facilitate manufacturing: Wave shaped expansion slits can counteract undesired clamping-together of expansion sleeve blanks, e.g. during coating or feeding, and therefore facilitate anchor assembly.

Preferably, the non-planar flanks are shaped by coining a generally flat blank, in which the expansions slits have been pre-formed, preferably by blanking. Besides forming of the expansion slits, the coining process also allows to provide non-uniform wall thickness within the expansion sleeve, which can further improve functionality. In the coining process, the material forming the flanks is widened, and the expansion slits are narrowed. Compared to a blanking-only process, the combination of blanking and subsequent coining can allow to obtain particularly narrow expansion slits (i.e. particularly small slit widths), which can in term increase contact surface of the expansion sleeve and thus improve anchor performance: In a blanking-only process, there is a technical limit of the slit width due to a technical limit of the blanking die used due to breakage by bending. In contrast, if blanking is followed by coining, the slit width can be further reduced, since the blanked slit width will be closed due to widening of the material that is located adjacent to expansion slit during coining operation.

The expansion slits define forwardly facing expansion fingers of the expansion sleeve, which expansion fingers are wedged radially outwardly by the wedge body during installation of the anchor. Since the head of the expansion slit is, in the circumferential direction, wider than the stem of the expansion slit, the head forms a constriction, i.e. a weakening, in the adjacent expansion fingers, which facilitates outward wedging of these expansion fingers. On the other hand, due to its rearward arrangement and due to its width, the head tends to define a bending point when the expansion sleeve is manufactured in a bending process.

The anchor bolt is an elongate body. The wedge body and the anchor bolt are, in particular, connected to transfer tensile forces. The wedge body can for example be threaded to the anchor bolt, in particular if the expansion anchor is a so-called sleeve-type expansion anchor. The wedge body can also be tightly fixed to the anchor bolt, in particular if the expansion anchor is a so-called stud-type expansion anchor. It is particularly preferred in case of a stud-type expansion anchor that the wedge body and the anchor bolt are monolithic, i.e. that they form one piece. If the expansion anchor is a so-called stud-type expansion anchor, the anchor bolt is preferably provided with a forwardly facing shoulder for expansion sleeve abutment and for advancing the expansion sleeve into the borehole. The wedge body is a part of the expansion anchor.

The expansion sleeve surrounds the anchor bolt, in particular around the longitudinal axis of the anchor bolt. In particular, the expansion sleeve can be a single piece.

Preferably, the anchor bolt, the expansion sleeve and/or the wedge body are each steel parts. They can for example comprise carbon steel or stainless steel.

The anchor bolt can have, in particular in a rear region of the anchor bolt, a tension-introducing structure. The tension-introducing structure is for introducing tensile forces into the anchor bolt. The tension-introducing structure can for example be a thread, in particular an external thread, provided on the anchor bolt. The tension-introducing structure can for example also be a head, that forms a maximum cross-section, or a bayonet-type lock.

The wedge zone of the wedge body is intended to expand the expansion sleeve when the wedge body is moved rearwards with respect to the expansion sleeve, in particular to expand the expansion sleeve radially with respect to the longitudinal axis. The wedge body converges, on its lateral surface, towards the rear of the anchor bolt and/or towards the tension-introducing structure, wherein the focus of convergence can preferably be the longitudinal axis. This in particular implies that the radial distance of the lateral surface of the wedge body from the longitudinal axis becomes smaller towards the rear of the wedge body. In particular, the wedge zone forms a wedge for the expansion sleeve.

The at least one expansion slit cuts the expansion sleeve and subdivides the expansion sleeve into expansion fingers. In particular, the at least one expansion slit cuts all the way through the wall thickness of the expansion sleeve, i.e. the expansion slit forms a radial perforation of the expansion sleeve. The expansion slit originates from the front face and extends rearwardly into the expansion sleeve. Preferably, the expansion slit extends generally parallel to the longitudinal axis, but it could also be angled with respect to the longitudinal axis. The stem of the expansion slit is located between the head of the expansion slit and the mouth of the expansion slit, i.e. the head is located at the rear of the stem and the mouth at the front of the stem. In particular, the head can define a rear end of the expansion slit. The head is preferentially wider than the stem, in particular in the circumferential direction. The mouth of the slit opens at the front face of the expansion sleeve. In particular, it forms a delta structure that converges into the stem, for example to provide a rounding. In particular, the mouth can be wider than the stem (in particular in the circumferential direction), at least in some regions of the mouth.

The first flank and the second flank face each other and delimit the stem in the circumferential direction. The flanks are side walls of the expansion sleeve. The flanks can also extend into the mouth and/or into the head of the expansion slit.

Preferably, the expansion sleeve has a plurality of expansion slits originating at the front face of the expansion sleeve. If there is a plurality of expansion slits provided, at least some of them, preferably all of them, are preferably configured in analogy to the at least one expansion slit described herein.

The expansion sleeve might also have one or more additional slits.

Where the term "longitudinal axis" is used, this should, in particular, refer to the longitudinal axis of the anchor bolt, which is often also the longitudinal axis of the anchor. In accordance with the usual definition, the "longitudinal axis" can in particular be the axis that runs in the longitudinal direction, i.e. in the long direction of the elongate anchor bolt. Where the terms "radially", "axially" or "circumferentially" are used, this is should in particular be understood with respect to the longitudinal axis of the anchor bolt.

Preferentially, the first flank and the second flank are non-plan-parallel with respect to one another throughout

In particular, the invention can be used with expansion anchors in which the expansion sleeve has non-constant wall thickness, i.e. in which the wall of the expansion sleeve varies in dependence of the position on the expansion sleeve. As explained in further detail in e.g. EP2848825 A1, which is included by reference, non-constant wall thickness can be provided in order to improve anchor performance.

The invention is explained in greater detail below with reference to preferred exemplary embodiments, which are depicted schematically in the accompanying drawings, wherein individual features of the exemplary embodiments presented below can be implemented either individually or in any combination within the scope of the present invention.

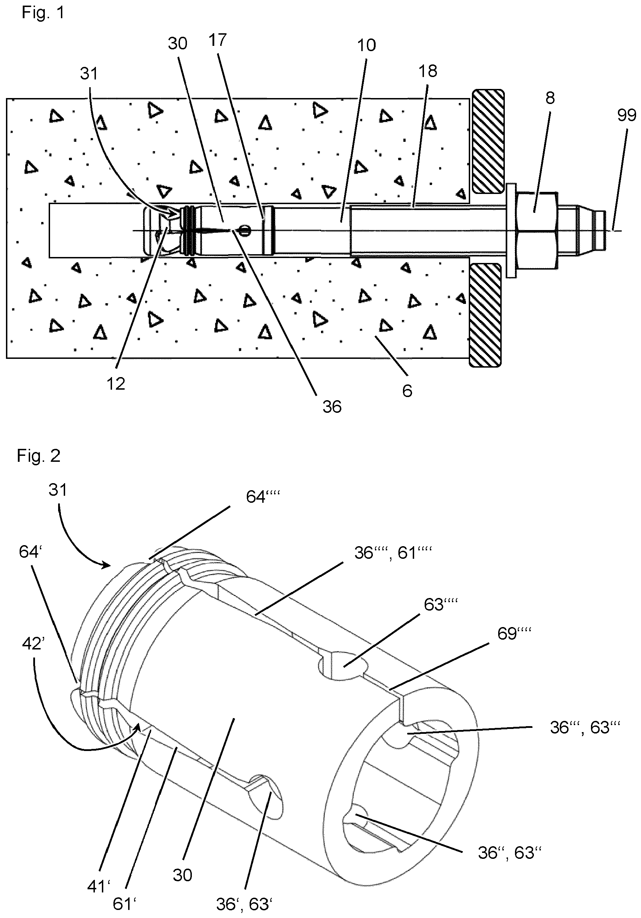

Figure 1 is a side view of an inventive expansion anchor.
Figure 2 is a perspective view of the expansion sleeve of the anchor of figure 1.

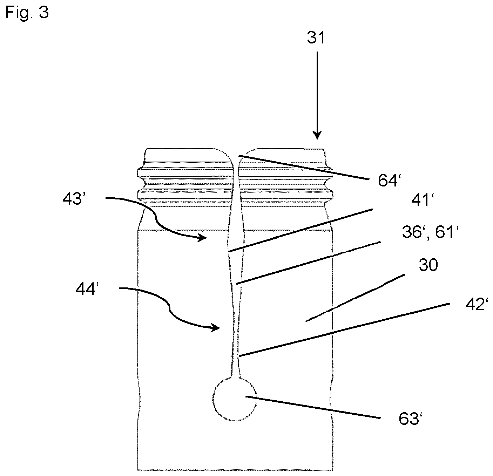

Figure 3 is a side view of the expansion sleeve of the anchor of figure 1.

The figures show an embodiment of an inventive expansion anchor. The expansion anchor comprises an elongate anchor bolt 10 defining a longitudinal axis 99, an expansion sleeve 30, which surrounds the anchor bolt 10, and a wedge body 12 provided on the anchor bolt 10, namely in the vicinity of the front end of the anchor bolt 10. The wedge body 12 is designed for wedging the expansion sleeve 30 radially outwardly when the wedge body 12 is drawn into the expansion sleeve 30 in the rearwards direction, i.e. in the pull-out direction. For this purpose, the lateral surface of the wedge body 12 converges rearwardly, at least regionally. The longitudinal axis 99 extends through the front end and through the rear end of the anchor bolt 10.

The anchor bolt 10 has a neck, which is located adjacent to and rearwards of the wedge body 12. The expansion sleeve 30 at least partly surrounds this neck, at least before installation of the anchor. At the neck, the diameter of the anchor bolt 10 can be minimal.

In the present embodiment, the expansion anchor is a stud type anchor. Hence, the anchor bolt 10 has, at the rearward end of the neck, a shoulder 17 facing forwards for axially engaging the expansion sleeve 30 and for advancing the expansion sleeve 30 forwards. In the present case, the wedge body 12 is, by way of example, integral with the remainder of the anchor bolt 10, but in alternative embodiments, the anchor bolt 10 can consist of several separate parts.

In a rear region of the anchor bolt 10, the anchor bolt 10 is provided with a tension-introducing structure 18, which is here, by way of example, an external thread provided on the anchor bolt 10. However, this is an example only, and other structures such as internal threads, bayonet mechanisms or heads can also be envisaged.

The expansion sleeve 30 is a C-shaped clip and is provided with a plurality of expansion slits 36', 36", 36"', 36"". Each of these expansion slits 36', 36", 36"', 36"" originates at the front face 31 of the expansion sleeve 30 (i.e. at that face of the expansion sleeve 30 that faces the wedge body 12) and extends towards the rear end of the expansion sleeve 30 (and thus towards the rear end of the anchor bolt 10). Each of the expansion slits 36', 36", 36"', 36"" radially cuts through the expansion sleeve 30, i.e. each of the expansion slits 36', 36", 36"', 36"" divides the expansion sleeve 30.

The expansion slit 36' comprises a mouth 64', a stem 61' that adjoins the mouth 64' and a head 63' that adjoins the stem 61'. The mouth 64' is arranged at the front face 31 of the expansion sleeve 30 and forwardly with respect to the stem 61', whereas the head 63' is arranged rearwardly with respect to the stem 61'. Accordingly, the stem 61' is arranged between the head 63' and the mouth 64'. The mouth 64' forms the forward end of the expansion slit 36' and the head 63' forms the rearward end of the expansion slit 36'. The stem 61' is a narrow, generally linear trench. Compared to the stem 61', the head 63' has greater width in the circumferential direction, i.e. around the longitudinal axis 99. Due to its width, the head 63' forms a local weakening of the adjacent expansion sleeve 30, which facilitates expansion of the expansion sleeve 30. The mouth 64' forms a delta structure that converges into the stem 61'. The delta structure provides a rounding of the front face 31.

In the shown embodiment, the stem 61' extends, generally, in the axial direction, i.e. generally parallel to the longitudinal axis 99. However, angled configurations could also be envisaged.

In the shown embodiment, the head 63' is generally circular. This, however, is only an example, and other, non-circular outlines can also be envisaged. In particular, an elongate, for example approximately elliptical, outline, wherein the elongate direction generally follows the circumferential direction of the anchor bolt 10 can be provided.

In the circumferential direction, the stem 61' is delimited by a first flank 41' of the expansion sleeve 30, and by a second flank 42' of the expansion sleeve 30, wherein the first flank 41' and the second flank 42' face each other. Both the first flank 41' and the second flank 42' are generally free form shaped when in the axial direction. In particular, the first flank 41' and the second flank 42' extend non-parallel with respect to one another. Both the first flank 41' and the second flank 42' are non-planar each. Due to the non-planar shape of the first flank 41' and the second flank 42', the stem 61' has a widening 43' (at which the width of the expansion slit 36' is a local maximum, in particular a strict local maximum) and a narrowing 44' (at which the width of the expansion slit 36' is a local minimum, in particular a strict local maximum, wherein in both cases, the width can in particular be measured in the circumferential direction).

Expansion slit 36" also comprises a mouth, a stem and a head 63", wherein these items are arranged and configured in analogy to expansion slit 36', so that the description above is applicable mutatis mutandis. Expansion slit 36'" also comprises a mouth, a stem and a head 63'", wherein these items are arranged and configured in analogy to expansion slit 36', so that the description above is applicable mutatis mutandis. Expansion slit 36"" also comprises a mouth 64"", a stem 61"" and a head 63"", wherein these items are arranged and configured in analogy to expansion slit 36', so that the description above is applicable mutatis mutandis. The expansion slits 36', 36", 36'" are blind slits each, and accordingly, they do not reach the rear end of the expansion sleeve 30. Accordingly, the head 63' defines a rear end of expansion slit 36', the head 63" defines a rear end of expansion slit 36" and the head 63'" defines a rear end of expansion slit 36"'. The expansion slit 36"", on the other hand, is a through slit which extends all the way through the expansion sleeve 30, i.e. from the front face 31 of the expansion sleeve 30 to the rear end of the expansion sleeve 30. Accordingly, the expansion slit 36"" has a tail 69"", which extends from the head 63"" to the rear end of the expansion sleeve 30. The head 63"" is thus located axially between the stem 61"" and the tail 69"". The expansion slit 36"" being a through slit can be interrelated to a manufacturing process in which a flat blank is bent around the anchor bolt 10 to give the expansion sleeve 30, so that the expansion slit 36"" gives the closure interface of the expansion sleeve 30.

The expansion sleeve 30 has non-constant wall-thickness, i.e. the wall thickness is dependent on the position on the expansion sleeve 30, in particular on the circumferential position.

In use, the expansion anchor is introduced, front end first, into a hole in a substrate 6. Subsequently, the wedge body 12 is drawn into the front face 31 of the expansion sleeve 30. In the present embodiment, this is achieved by pulling the anchor bolt 10 together with the wedge body 12 rearwardly, in particular by tightening a nut 8 provided on the tension-introducing structure 18 of the anchor bolt 10. This loads the expansion sleeve 30 radially outwardly, thereby locking the expansion anchor in the substrate.

## Claims

1. Expansion anchor having
- an anchor bolt (10),
- an expansion sleeve (30) that surrounds the anchor bolt (10), and
- a wedge body (12) located in a front region of the anchor bolt (10) for wedging the expansion sleeve (30), wherein the expansion sleeve (30) has a front face (31) facing the wedge body (12),
- wherein at least one expansion slit (36) is provided within the expansion sleeve (30), wherein the expansion slit (36) originates at the front face (31) of the expansion sleeve (30), wherein the expansion slit (36) has a mouth (64) that is located adjacent to the front face (31), a stem (61) that adjoins the mouth (64) and a head (63) that adjoins the stem (61), wherein the head (63) is wider than the stem (61), and wherein the stem (61) is located between the head (63) and the mouth (64),
- wherein the stem (61) of the expansion slit (36) is delimited by a first flank (41) of the expansion sleeve (30) and by a second flank (42) of the expansion sleeve (30),
**characterized in that**
- the first flank (41) and the second flank (42) are both non-planar throughout, so as to form at least one widening (43) and at least one narrowing (44) along the stem (61).

2. Expansion anchor according to claim 1,
**characterized in that**
the first flank (41) and the second flank (42) are non-plan-parallel with respect to one another throughout.
